# EUROPEAN PATENT APPLICATION

(11) **EP 1 538 477 A1**
(43) Date of publication of application: **08.06.2005**
(21) Application number: 04027976.2
(22) Date of filing: 25.11.2004
(51) Int. Cl.: G02B 27/01, G02B 6/00

(54) **Image display system and method for head-mounted viewing system**

(30) Priority: 01.12.2003 US 726019
(71) Applicant: L-3 Communications Corporation, New York, N.Y. 10016 (US)
(72) Inventor: Riser, Andrew, Murrieta, California 92562 (US); Rodgers, Michael J., Pasadena, California 91107 (US); Sisodia, Ashok, Arlington, Texas 76006 (US); St. John, Thomas, Bedford, Texas 76021 (US)
(74) Representative: Staudt, Armin

(57) **Abstract**

A visor display apparatus for is supported on the head of a user, preferably on a helmet on the user's head. The apparatus comprises a support structure supported on the head of a user and supporting a viewing portion facing one of the eyes of the user. The apparatus also includes a housing supporting therein an image display system. The image display system has three LEDs generating light, being red, green and blue. Plastic optical fibers are bonded to the LEDs and receive light from the LEDs, combining the three colors of light in a single output. A reflective display receives image data and forms an image therefrom. The output of the optical fibers transmits the light to the reflective display so that the light received from the LED is reflected by the reflective display to project the image. The apparatus further has optics receiving the projected image from the reflective display and transmitting said image to the viewing portion so as to be viewed by the user. A polarizing structure positioned intermediate the optical fiber and the reflective display permits passage of light therethrough having a first polarity and reflects light of the orthogonal polarity. The light from the optical fiber strikes the polarizing structure both before and after the light strikes the reflective display. In one instance the light is reflected by the polarizing structure and in the other instance the polarizing structure permits passage of light therethrough.

## Description

### Field of the Invention

This invention relates to the field of viewing systems, and more particularly to the field of viewing systems that are supported on the head of a user.

### Background of the Invention

Prior art display systems worn on the head of a user have been used in a variety of fields, including scientific and medical endoscopic surgery visualization, entertainment, assembly and maintenance operations, training and simulation, aviation, and especially military aviation. Such head-supported display systems have generally included a head-band or helmet on the user's head with partially transparent surfaces in front of the eyes of the user for augmented reality applications where the computer generated information is overlaid with the see-through real world and with non-transparent surfaces for virtual reality applications where the real world imagery is occluded. For the case of augmented reality visual systems, images from two displays are reflected from the partially transparent surfaces in front of the eyes to the user's eyes, so that the user can see the real world through the viewing surface and also see the projected images.

The display device that forms the image in such systems has been in the prior art emissive miniature cathode ray tubes (CRTs) with their inherent disadvantages of mass and size plus the requirement for high-voltages, or high-resolution miniature solid state flat panel displays such as transmissive Active Matrix Liquid Crystal Displays (AMLCD), such as those produced by Kopin Corporation, 695 Myles Standish Blvd., Taunton, MA 02780. These AMLCD displays transmit light therethrough to produce the image to be displayed. The light that is directed through the display has usually been provided by a light source outside of the helmet and transmitted to the helmet by a bundle of fiber optics connected with the back of the display device. This bundle of fiber optics increases weight of the apparatus, creating fatigue in the user, and also results in a thick tether at the back of the user's head that restricts movement.

Also, transmissive displays require a larger liquid crystal cell gap to obtain adequate contrast, which makes them slower and results in image smearing. Also, the aperture ratio, which is the ratio of clear area of the pixel over the total area of pixel, is much smaller than for reflective displays resulting in inefficiency. Normally, to obtain a full color image, three transmissive displays are needed to obtain good contrast.

In addition, a transmissive display, being like a transparent window, has an outer frame of electronics surrounding the display portion. This outer electronics structure makes the device larger than the display area alone, and this results in a larger external housing for the display in the head mounted system, which is also undesirable from the standpoint of movement and comfort of the user.

### Summary of the Invention

Accordingly it is an object of the invention to provide a head-supported display system that reduces the weight and volume of the apparatus supported on the user's head.

A display apparatus according to the invention comprises a support structure supported on the head of a user. The structure supports a viewing portion facing one of the eyes of the user and a housing. The housing supports therein an image display system comprising a Light Emitting Diode (LED) generating light, a first plastic optical fiber bonded to the LED and receiving light from said LED; and a reflective display receiving image data and forming an image therefrom. The optical fiber transmits the light to the reflective display so that the light received from the LED is reflected by the reflective display to produced the image. Optics receive the produced image from the reflective display and transmit the image to the viewing portion so as to be viewed by the user.

According to a further aspect of the invention, the said support structure is a visor assembly configured to be supported on a helmet or head-band worn by the user.

According to a further aspect of the invention, the image display system further comprises three LEDs, one red, one blue and one green, each bonded to a plastic optical fiber with a combined end portion, so that the combined end portion transmits light from the three LEDs combined together.

According to a further aspect of the invention, the plastic optical fibers of the apparatus comprise a plurality of plastic optical fiber elements. The LEDs are bonded to the plastic optical fiber by grinding the original lens on the LEDs to generate an optimal surface to match the numerical aperture of the optical fibers for maximum light coupling efficiency and then bonding an end of the optical fiber bundle to that surface.

According to a further aspect of the invention, a collection mirror is positioned adjacent to the output of the optical fibers. The collection mirror efficiently collects the light emitted by the optical fiber output and directs it in the direction of the reflective display.

According to a further aspect of the invention, a polarizing structure, e.g., a polarizing beamsplitter, is positioned intermediate the collecting mirror and the reflective display. The polarizing structure permits passage of light having a first polarity therethrough and reflects light of the orthogonal polarity. The light from the collecting mirror strikes the polarizing structure in instances before and after the light strikes the reflective display. In one instance, the light is reflected by the polarizing structure, and in the other instance the polarizing structure permits passage of light therethrough.

According to a further aspect of the invention, a collimating doublet lens is positioned adjacent to the transmission surface of the polarizing structure. The collimating doublet lens produces a collimated column of light that is necessary to achieve optimum contrast imagery.

According to a preferred embodiment, a head-supported assembly comprises a reflective Liquid Crystal on Silicon microdisplay or AMLCD to which light is supplied by plastic fiber optics bonded to one or more LEDs in the head-supported assembly. Preferably, three LEDs are used, being red, green and blue, respectively, each being bonded to a respective set of optical fibers that combine the light from the LEDs in a single output. A polarizing structure reflects and permits passage of light striking the reflective display.

Other objects and advantages of the invention will become apparent from the specification.

### Brief Description of the Drawings

Figure 1 is a perspective view of a helmet equipped with a head-supported display system according to the invention;
Figure 2 is an schematic diagram of the head-supported display system according to the invention;
Figure 3 is a perspective view of the image display system inside the housing of the head-supported display system;
Figure 4 is a perspective view of the image display system inside the housing of the head-supported display system from a different angle from that of Fig. 3.
Figure 5 is a perspective view of the image display system inside the housing of the head-supported display system from a different angle from that of Fig. 3.
Figure 6 is a perspective view of the image display system inside the housing of the head-supported display system from a different angle from that of Fig. 3.
Figure 7 is a cross-sectional view through the centerline of the image display system.
Figure 8 is detailed illustration of the process of affixing an optical fiber to an LED according to the invention.

### Detailed Description

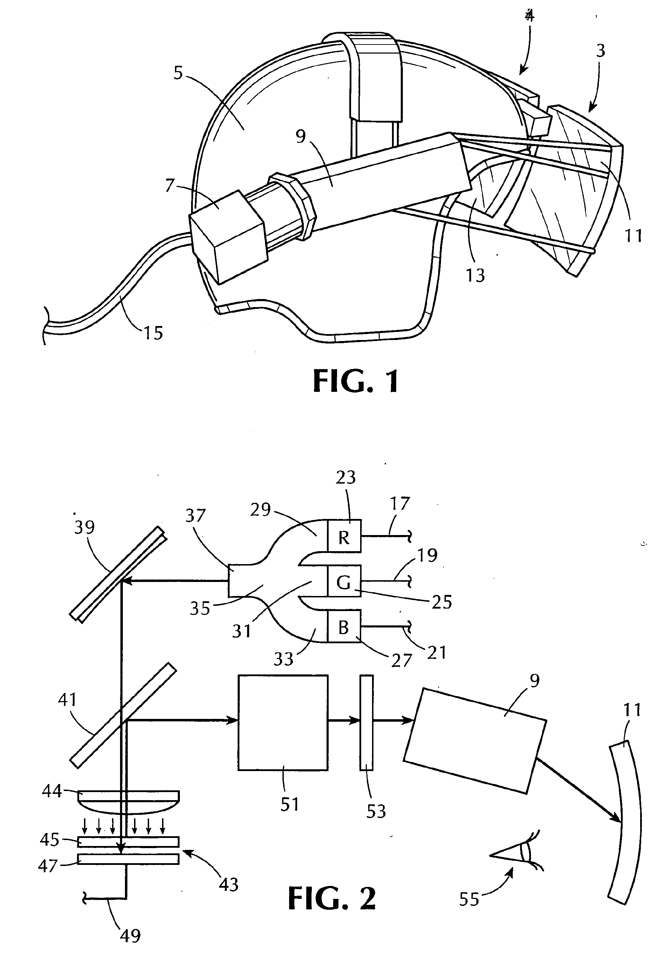

As best shown in Fig. 1, in one embodiment of the invention, a head supported display apparatus takes the form of a visor generally indicated at 3 that is configured to be mounted on a helmet 5, preferably a standard military helmet, such as the helmets sold by Gentex Corporation in Carbondale, Pennsylvania under model descriptors HGU 56P and HGU 55P. These helmets are usually provided with a clip generally indicated at 4 above the wearer's forehead for connecting and supporting night vision goggles. This clip is preferably used to support the visor 3 on the helmet. Alternatively, helmets are also frequently equipped with sun visor mounting holes that also can be used to attach the display apparatus.

The visor 3 is made up of an image system housing 7 connected with an optics assembly in attached housing 9. The optics assembly 9 receives light of an image from a display in housing 7 and transmits the image to the surface of viewing or projection structure 11, which reflects the light of the image to the eye of the user. The optics assembly 9 of the shown embodiment is adapted from optics assemblies well known in the prior art that display to a user an image from a light transmissive AMLCD secured to an end of the assembly 9. Especially preferred is the optics of the Advanced Visionics System described in Girolamo, Rash, and Gilroy, "Advanced Information Displays for the 21^{st} Century Warrior ", published by the Society for Information Displays in Information Displays (March 1997), which is well known in the art, and is herein incorporated by reference.

The visor 3 includes a second viewing structure or combiner 13 for the other eye of the user, although the surface area for projection in front of both eyes could be a continuous surface. It will be understood that a similar mirror image optical system 9 and image system with housing 7 is found on the opposite side of the helmet, to provide an image to the other eye of the user.

A cable or tether 15 is connected with the housing 7 and provides to the circuitry therein power for the light generating components as well as video image data for display. The video image data is normally formulated real-time in a connected computer system image generator (not shown), and the video image data comprises streamed data defining a series of images to be displayed sequentially in real time to a user. The cable 15 is preferably as lightweight and flexible as possible to minimize weight and to restrict as little as possible movement of the user's head while wearing the visor and helmet. In addition, the housing may additionally enclose a multiplexer that reduces the number of physical wires that are needed for the cable 15.

It is especially desirable that the visor 3 should not be too heavy or have a configuration or rotational inertia that will render the rotation of the user's head difficult, as this will cause fatigue or discomfort. To minimize these effects, it is especially an object of the invention to reduce both the weight and the volume of the visor 3 and the housing 7 in particular.

Preferably, viewing structures 11 and 13 are combiners that are reflective to a degree and also transparent to at least some degree so that the user can see the video image thereon and also see through the viewing structures 11 and 13 to view the environment, or a simulation thereof where the apparatus is used in a vehicle simulator. The image generator computer can define the video imagery to be, for example, head-up display type symbology, such as data relating to another aircraft that can be seen through the combiner 11 or 13 of visor 3, positioned thereon to be seen by the user to be superimposed over the other aircraft. A wide range of other types of data may also be employed, as for example, infra-red imagery derived from sensors overlying the actual field of view of the user through the visor. Similarly, a sort of virtual cockpit may be displayed, as may any other type of data.

Figure 2 shows a schematic of the internal workings of the visor 3. Electrical power is supplied along lines 17, 19 and 21 running through cable 15 to three LEDs 23, 25 and 27. These LEDs are preferably of three different colors, most preferably red, blue and green, that can be additively combined to make up virtually any color. The LEDs are preferably LEDs of the type marketed under the name Luxeon^{TM} Star 5-watt by Lumileds Lighting, LLC, of San Jose, California. The level of electrical power sent to each of the LEDs, and their relative intensity, can be independently controlled by circuitry connected with the cable 15 to the visor 3.

The LEDs are each bonded to a respective end 29, 31 and 33 of optical combiner 35, which is made up of plastic optical fiber elements. Each end is bonded to the respective LED to receive the light therefrom and transmit it to an opposing output end 37 of optical combiner 35. The optical fiber elements each have one end bundled with the ends of the other optical fiber elements associated with the same LED at the respective end affixed to the LED, and an opposing end in the output end 37 of the optical combiner 35 in which the ends of all the optical elements associated with all three LEDs 23, 25, and 27 are spatially mixed and intermingled in a random distributed pattern therefore incoherent so that the light from each of the three LEDS is distributed over the entire output surface of the output end of the optical combiner 35.

In order to provide for full color displays, the LEDs are each illuminated for only a portion of a duty cycle of about 80 Hertz of the image display system, so that the display actually produces red, green and blue images in sequence so quickly that the user's eye sees the output as a full color video.

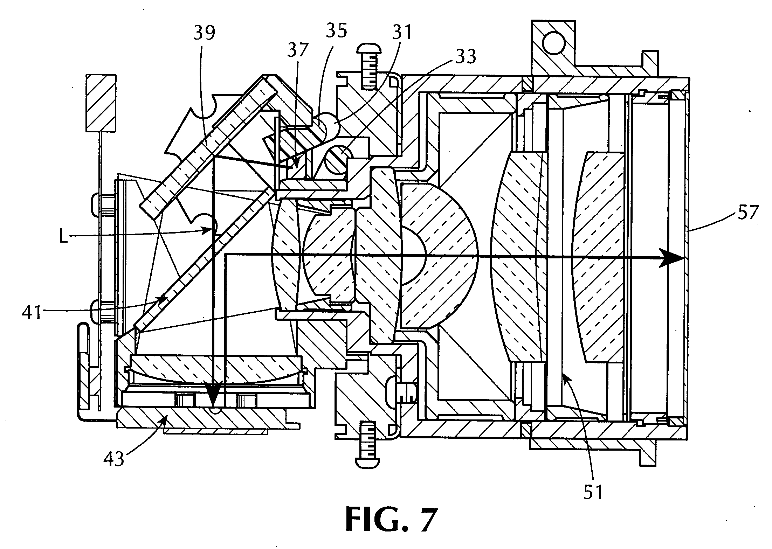

As shown in Fig. 2, and also Fig. 7, which is a cross-sectional view of the image display system in housing 7, the LED light leaves the output end 37 of combiner 35 and then strikes mirror 39, which reflects and the light to contact polarizing structure or bean splitter 41, which is a polarizing filter well known in the art, which allows light of a particular polarity to pass therethrough, while reflecting light of the orthogonal or different polarity. The LED light is of various polarities, so some of the light striking the polarizer 41 is reflected, and some of the light is permitted to pass through the polarizer filter 41 and reach reflective display device 43.

Between the polarizing beam splitter 41 and the reflective microdisplay device 43, a collimating lens doublet 44 is placed to collimate the light being reflected in a cone from concave mirror 39 to collimate as a bundle of light striking the display 43.

Reflective display device 43 comprises a microdisplay image portion 45, which is an LCD screen through which light passes and is reflected from a reflective surface 47 on a base thereof, which is part of the same device component. Particularly preferred for use as the reflective display device are the reflective microdisplays manufactured by CRL Opto Ltd., of Dunfermline, Scotland. These microdisplays are spatially efficient, being .6 to .88 inches in size and having pixels in a resolution of 1024 x 768 or 1280 x 1024. Generally, a microdisplay is a display with a diagonal dimension of less than three inches, and preferably about one inch.

The reflective display 43 receives electronic signals corresponding to image data from an input connection 49 that connects with the image generating computer system, which determines the images to be displayed to the user. The connection 49 preferably is a wire connection that extends through cable 15. A variety of communications processes known in the art may be used to connect with the image generator system and to permit the image generator system to control the image output on the reflective microdisplay device 43.

The light shining on image display device 43 is filtered by the microdisplay LCD as it passes through the screen portion 45 and is reflected back therethrough by reflective surface 47 thereof. The reflected light with the image from the display passes back through the collimating lens doublet 44 to reach the polarizing structure 41. However, the reflection on surface 47 reverses the polarity of the light so reflected, and as a consequence, in this instance, when the light contacts the polarizing structure 41, instead of passing therethrough, it is reflected to optics 51, which focus the image thereof onto a backprojection diffusion screen 53.

Diffusion screen 53 provides an output that can be mated with conventional optics assembly 9, which is used with AMLCD displays in prior art systems. The optical assembly 9 directs the light of the image on the diffusion screen 53 to project against the viewing surface of viewing structure 11 or 13, so as to be viewed by the eye 55 of the user wearing the device 3. It is an advantage of the present embodiment that the lightweight and compact image display system in housing 7 can be combined with the existing optics of head mounted displays that relied on less acceptable transmissive AMLCD displays, and these existing optics systems are generally commercially available off-the-shelf items.

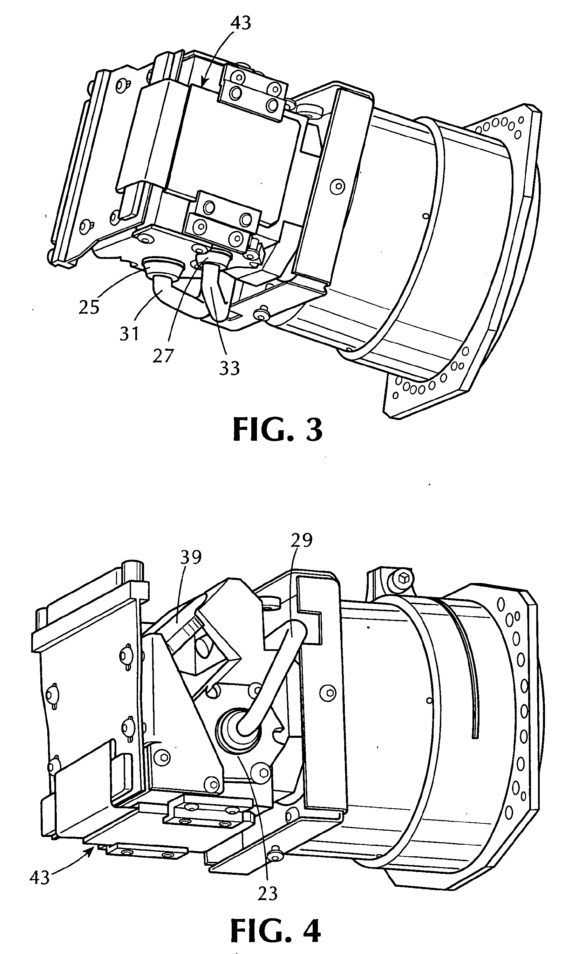

The interior spatial arrangement of the components in the housing 7 is best seen in Figures 3 to 7. The concerns governing the configuration are that the assembly should be as light and compact as possible. In addition, the LEDs in the image display system generate heat, and it is desirable to position these LEDs to distribute and sink heat as effectively as possible.

Referring to figure 3, the components of the image display system are supported on a chassis generally indicated at 57, which is roughly box-shaped at one end thereof. On one side of the chassis, two LEDs 25 and 27 are mounted, and on the other side of the chassis 55 (see Fig. 4) the third LED 23 is mounted. The outward positioning of these LEDs as separate as possible from each other provides for suitable dissipation of heat generated by the LEDs during operation.

Each LED is bonded to a respective input end 29, 31, or 33 of the plastic optical fiber combiner 35. The optical combiner is made up of a number of plastic optical fiber elements that preferably have a thickness of 50 microns and are bundled together to be bonded at one end to the associated LED 23, 25 or 27. The optical fiber elements may be selected from a variety of plastic optical fibers for use with visible light wavelengths. One example of a suitable plastic optical fiber for use in making the optical combiner 35 is the acrylic optical fiber sold under the name Lumileen by Poly-Optical Products, Inc., of Irvine, California. Suitable plastic optical fibers are also manufactured by Mitsubishi Rayon Co. Ltd. of Tokyo, Japan.

One of the important physical attributes of the plastic optical fibers used in the invention is that they can be bent into a small radius of curvature, and this allows for a very compact fitting of the optical fibers in the housing, which is an important object of the present invention, as has been set out above.

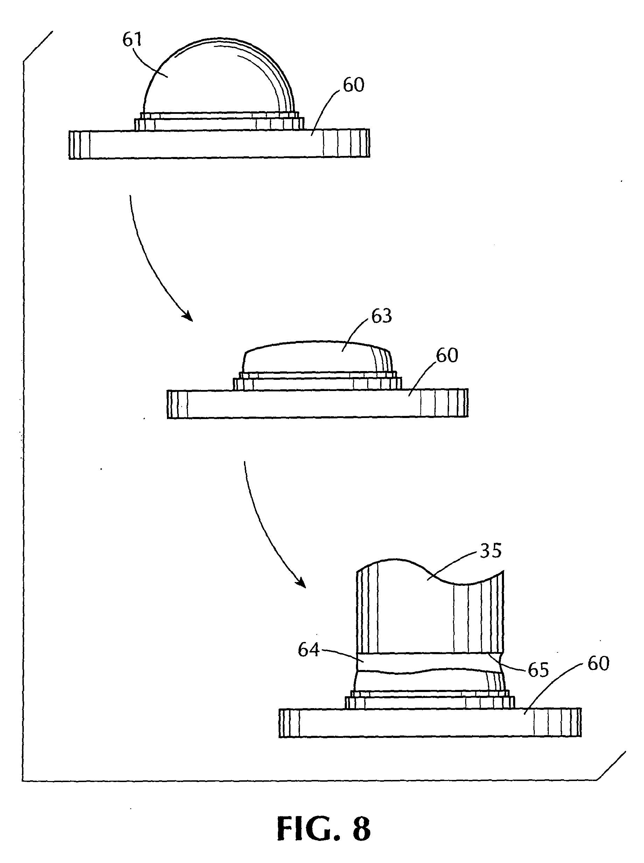

The method of bonding the plastic optical fiber end of the optical combiner 35 is illustrated in Fig. 8. An off-the-shelf LED 60 usually has a generally hemispherical outer portion 61 created by the manufacturer. This portion 61 is machined or ground off, down to a surface 63that is optimally shaped for matching the acceptance cone angle of the optical fibers for maximum light coupling efficiency adjacent the actual light-emitting portion of the LED. Generally, this will be a somewhat flattened hemispherical portion that will emit essentially all of the light from the LED at an angle that is within the cone of light that can enter the end of the attached fiber optic, resulting in maximum transfer of light in the LED to the fiber optic.

In the bonding process, a flat end 65 of one of the input ends 29, 31, or 33 of the optical combiner is then bonded to this surface 63, preferably by an adhesive such as epoxy that has a refractive index matching refractive index of the LED material and the optical fiber material, for minimizing light losses at the interface. Ideally, the refractive indices of all the materials are equal. If this is not possible, then the refractive index of the adhesive 64 should be between the refractive index of the LED material and the refractive index of the fiber optic material.

Alternatively, the end of the optical fiber may be curved to complement the optimal surface formed on the LED.

Light from the LED then enters directly into the ends of the individual optical fiber elements that make up the input end of the optical combiner and proceeds to the opposite end of the optical combiner 35, as has been discussed above.

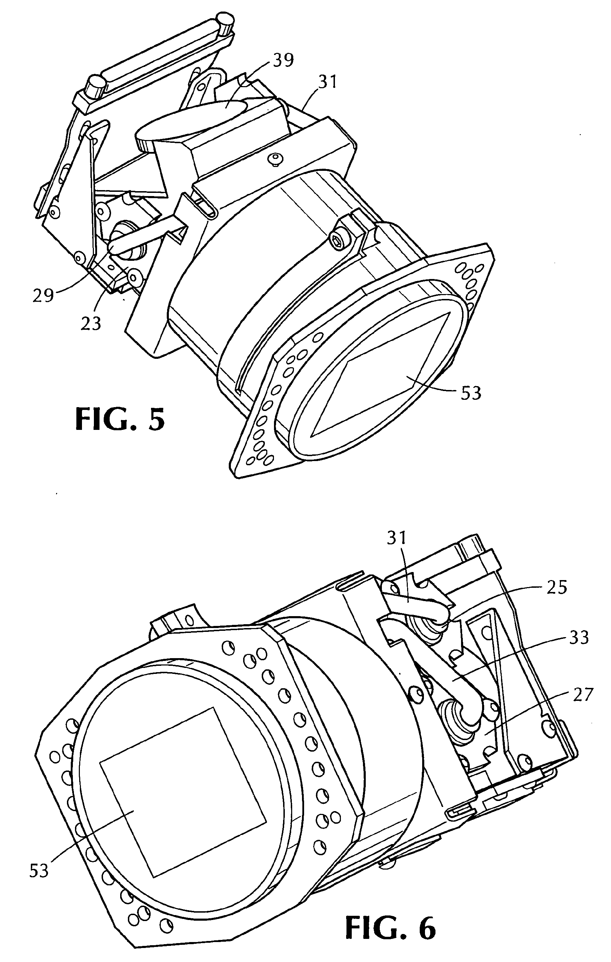

Referring to Figs. 5, 6, and 7, the light from the reflected image from the microdisplay 43 passes through a series of optics or lenses (Fig. 7) to be projected on backlit diffusion screen 57. The diffusion screen 57 is supported in a flange structure 67 that is secured, as by bolts, to the end of the external optics assembly 9.

Although the foregoing embodiment is a workable system for taking advantage of the benefits of the invention, other structures are particularly preferred. It is preferable to provide, for instance, a more modular visor structure in which the optics assembly 9 is replaced with a lighter off-axis lens assembly that does not rely on a flat screen output, as is provided using diffusion screen 53, but in which the reflected image is transmitted directly to the projection viewing portion 11 from the microdisplay 43.

Also, another embodiment that is especially beneficial with respect to advantageous use of the invention is one in which the optical combiner has two ends instead of one. The ends of the individual plastic optical fibers of the apparatus are intermixed as with the output ends of the combiner 35 above to produce a uniform distribution of the light from each of the LEDs transmitted through the combiner at both output ends of the combiner. The combiner receives light from the three LEDs and directs the light to two ends of the optical combiner, each one directing the light laterally inward from a respective side of a prism overlying the microdisplay.

Within the prism are imbedded or otherwise formed a pair of polarizing filter surfaces or planes that pass light of one polarity and reflect light of orthogonal polarity. These surfaces extend up at 45 degree angles from a lateral centerline of the microdisplay to form a V-cross-section in the prism. Light from one of the ends of the optical combiner enters the prism from one lateral side and strikes one of these polarizing surfaces. Part of this light is reflected down to the microdisplay, where it is passes through the reflective microdisplay LCD to produce the image displayed and then is reflected back to the polarizing plane, with reversed polarity. This reflected light image then passes through the polarizing plane and is directed to the optics assembly discussed above that projects the image directly on the viewing portion of the visor. The light from the second output of the combiner enters the prism from the other lateral side and is reflected down to the other lateral half of the microdisplay in a mirror image of the light path of the first output portion's light, and is reflected out to join the image from the other half of the microdisplay in the projection optics.
It will be understood that the invention herein extends well beyond the embodiments of the disclosure, and the terms used in this specification should be understood to be language of description, not limitation, as those of skill in the art with this specification before them will be able to make changes and modifications therein without departing from the scope of the invention.

## Claims

1. A display apparatus comprising:
a support structure supported on the head of a user, said structure supporting a viewing portion facing one of the eyes of the user and a housing;
said housing supporting therein an image display system comprising
an LED generating light;
a first plastic optical fiber bonded to the LED, said optical fiber receiving light from said LED; and
a reflective display receiving image data and forming an image therefrom, said optical fiber transmitting the light to said reflective display so that the light received from the LED is reflected by the reflective display to project said image; and
optics receiving said projected image from the reflective display and transmitting said image to the viewing portion so as to be viewed by the user.

2. A display apparatus according to claim 1, wherein said support structure is a visor assembly configured to be supported on a helmet worn by the user.

3. A display apparatus according to claim 1 or 2, wherein said image display system further comprises a second LED bonded to a second plastic optical fiber receiving light from the second LED, said first and second optical fibers having a combined end portion transmitting the light from the first and second LEDs combined together.

4. A display apparatus according to claim 3, wherein said image display system further comprises a third LED bonded to a third plastic optical fiber receiving light from the third LED, said third optical fiber also being connected with the combined end portion, so that the combined end portion transmits light from the first, second and third LEDs combined together.

5. A display apparatus according to claim 4, wherein the three LEDs each have a respective different color.

6. A display apparatus according to claim 5, wherein said colors are red, green and blue.

7. A display apparatus according to any of the claims 1 to 6, wherein said plastic optical fiber comprises a plurality of plastic optical fiber elements each configured to receive light at one end thereof and transmit at least a portion of said light to an opposing end thereof.

8. A display apparatus according to claim 3, wherein said plastic optical fibers each comprise a plurality of plastic optical fiber elements each configured to receive light at one end thereof and transmit at least a portion of said light to an opposing end thereof, and wherein the combined end portion comprises the ends of the optical fiber elements spatially intermixed to combine the light transmitted from the first and second LEDs.

9. A display apparatus according to any of the claims 4, 5 or 6, wherein said plastic optical fibers each comprise a plurality of plastic optical fiber elements each configured to receive light at one end thereof and transmit at least a portion of said light to an opposing end thereof, and wherein the combined end portion comprises the ends of the optical fiber elements spatially intermixed to combine the light transmitted from the LEDs.

10. A display apparatus according to claims 6 and 9, wherein said plastic optical fibers elements are randomly distributed in the combined end portion so as to combine the light from the LEDs transmitted therefrom.

11. A display apparatus according to any of the claims 1 to 10, wherein said LED is bonded to the plastic optical fiber by cutting the LED to expose a surface and then bonding an end of the optical fiber to said surface.

12. A display apparatus according to any of the claims 3, 4 or 9, wherein said LEDs are each bonded to the associated plastic optical fiber by cutting each LED to expose a respective surface and then bonding an end of the associated optical fiber to said surface.

13. A display apparatus according to claim 1 or 4, wherein a polarizing structure is positioned intermediate the optical fiber and the reflective display, said polarizing structure permitting passage of light therethrough having a first polarity and reflecting light of a polarity that is reverse of said first polarity, the light from the optical fiber striking the polarizing structure in instances before and after the light strikes the reflective display, in one instance said light being reflected by the polarizing structure and in the other instance said polarizing structure permitting passage of light therethrough.

14. A display apparatus according to claim 13, wherein the polarizing structure permits passage of some of the light from the optical fiber therethrough to strike the reflective display, and reflecting said light after it is reflected off the reflective display.

15. A display apparatus according to any of the claims 1 to 14, wherein the viewing portion is transparent such that the image is visible to the user thereon superimposed on a view therethrough.

16. A display apparatus according to any of the claims 1 to 15, and further comprising a diffusion screen between said reflective display and the optics.

17. A display apparatus according to any of the claims 1 to 16, wherein the reflective display comprises a reflective surface and a liquid crystal image field overlying said reflective surface.

18. A display apparatus according to any of the claims 1 to 17, wherein the reflective display comprises an active-matrix liquid crystal display overlying a reflective surface.

19. A display apparatus according to any of the claims 1 to 18, wherein said LED is bonded to the plastic optical fiber by cutting the LED to expose a surface and then bonding an end of the optical fiber to said surface;
said surface being configured in a shape that transmits the light from the LED more efficiently to the optical fibers bonded thereto.

20. A display apparatus according to any of the claims 1 to 19, wherein said LED is bonded to the plastic optical fiber by cutting the LED to expose a surface and then bonding an end of the optical fiber to said surface;
said LED being bonded to the plastic optical fiber by an adhesive having a refractive index that is between that of the LED and the plastic optical fiber.

21. A display apparatus according to any of the claims 1 to 20, wherein said LED is bonded to the plastic optical fiber by cutting the LED to expose a surface and then bonding an end of the optical fiber to said surface;
said LED being bonded to the plastic optical fiber by an adhesive having a refractive index that is between that of the LED and the plastic optical fiber.

22. A display apparatus according to any of the claims 1 to 21, wherein said LED is bonded to the plastic optical fiber by cutting the LED to expose a surface and then bonding an end of the optical fiber to said surface;
said LED being bonded to the plastic optical fiber by an adhesive, the optical fiber being of a material with a refractive index greater than the refractive index of the LED material, said adhesive having a refractive index that is between that of the LED and the plastic optical fiber.
